# EUROPÄISCHE PATENTANMELDUNG

(11) **EP 4 462 653 A1**
(43) Veröffentlichungstag der Anmeldung: **13.11.2024**
(21) Anmeldenummer: 23172859.3
(22) Anmeldetag: 11.05.2023
(51) Int. Cl.: H02K 3/12, H02K 11/20, H02K 11/35, H02K 3/50

(54) **DIGITALISIERTE DYNAMOELEKTRISCHE MASCHINE MIT WECHSELRICHTERMODULEN**

(71) Anmelder: Siemens Aktiengesellschaft, 80333 München (DE)
(72) Erfinder: Brandl, Konrad, 93107 Thalmassing (DE); Hösle, Markus, 91058 Erlangen (DE)
(74) Vertreter: Siemens Patent Attorneys

(57) **Zusammenfassung**

Die Erfindung betrifft einen Antrieb (32) mit einer rotatorischen dynamoelektrischen Maschine (1) mit mehreren Wechselrichtermodulen (6),
- wobei an und/oder innerhalb des Antriebs (32) eine vorgebbare Anzahl von physikalischen und/oder chemischen Sensoren vorgesehen sind, die zumindest einem oder mehreren Abschnitten der rotatorische dynamoelektrische Maschine (1) und/oder einem oder mehreren Wechselrichtermodulen (6) zugeordnet sind,
- wobei dem Antrieb (32) zumindest eine Auswerte- und/oder Regeleinheit (29) zugeordnet ist, die zumindest eine Vorabauswertung von erfassten Daten der Sensoren ermöglicht,
- wobei eine Kommunikation von der Auswerte- und/oder Regeleinheit (29) zu zumindest einer Cloud und/oder zu den Wechselrichtermodulen in vorgebbaren Zeitabschnitten und/oder Datenpaketen ermöglicht ist.

## Beschreibung

Die Erfindung betrifft einen Antrieb mit einer dynamoelektrischen Maschine mit Wechselrichtermodulen, ein Verfahren zum Betrieb einer derartigen dynamoelektrischen Maschine mit Wechselrichtermodulen, als auch die Verwendung eines derartigen Antriebs.

Überdies betrifft die Erfindung ein Computerprogrammprodukt.

Ferner betrifft die Erfindung einen digitalen Zwilling eines derartigen Antriebs.

Wicklungssysteme von Statoren dynamoelektrischer Maschinen sind aus Wickeldrähten oder Leiterstäben aufgebaut, die in Nuten eines magnetisch leitfähigen Körpers des Stators angeordnet sind.

Besteht das Wicklungssystem nicht aus einer verteilten dreiphasigen Wicklung mittels Kabel oder Drähten, sondern aus einer Anzahl von Leiterstäben, ist aufgrund der vergleichsweise geringen Induktivität jedoch eine hohe Stromstärke erforderlich. Diese hohe Stromstärke benötigt aufgrund des geringen ohmschen Widerstandes der Leiterstäbe lediglich eine vergleichsweise geringe Spannung (<100V). Diese geringe Spannung ermöglicht es, Wechselrichtermodule, mit denen die Leiterstäbe angesteuert werden, in relativ geringem Abstand zueinander an der dynamoelektrischen Maschine anzuordnen.

Diese Leiterstäbe werden auf einer Stirnseite des magnetisch leitfähigen Körpers des Stators über einen Kurzschlussring miteinander verbunden, und auf der anderen Stirnseite des magnetisch leitfähigen Körpers des Stators durch jeweils zugeordnete Wechselrichtermodule gespeist, wie dies beispielsweise aus der DE 10 2005 032 965 A1 bekannt ist.

Anstelle der komplexen, arbeitsintensiven verteilten Statorwicklung wird somit auf eine kostengünstige, robuste Stabwicklung zurückgegriffen. Jede einzelne Statornut wird abhängig von den Betriebsbedingungen mit einem Leiterstab bestückt. Jeder Leiterstab wird bisher mit einer eigenen Leistungselektronik für die Stromversorgung und Regelung, dem Wechselrichtermodul verbunden. Das für den Betrieb der Maschine notwendige magnetische Feld wird durch hohe Ströme (bis zu einigen 1000 A) in den Leiterstäben bei gleichzeitig niedrigen Spannungen erzeugt.

Diese aus dem Wicklungskonzept resultierenden, geringen Spannungen ermöglichen damit einen kompakten und leistungsfähigen Aufbau des gesamten Antriebs, also der dynamoelektrischen Maschine mit den in den Wechselrichtermodulen verbauten Leistungselektronik.

Eine Messwerterfassung zur Überwachung oder Regelung eines Antriebs kann bei den bisherigen klassischen Antrieben beispielsweise über Sensorboxen am Gehäuse der dynamoelektrischen Maschine erfolgen. Dort sind u.a. Temperaturfühler und Magnetfeldmesser untergebracht, die aber abhängig vom Anbauort der Sensorbox am Gehäuse der dynamoelektrischen Maschine jeweilige Messsignale liefert. Aber auch an den jeweiligen Anbauorten wird lediglich eine summarische Messwerterfassung vorgenommen.

Ausgehend davon liegt der Erfindung die Aufgabe zugrunde einen oben genannten Antrieb mit einer verbesserten Regelung und/oder Überwachung auszustatten.

Die Lösung der gestellten Aufgabe gelingt durch einen Antrieb mit einer rotatorischen dynamoelektrischen Maschine mit mehreren Wechselrichtermodulen,
- wobei die rotatorische dynamoelektrische Maschine einen Stator und einen Rotor aufweist,
- wobei der Stator ein Wicklungssystem in einem magnetisch leitfähigen Körper, insbesondere einem Blechpaket aufweist, wobei Stator und Rotor durch einen Luftspalt voneinander getrennt sind,
- wobei das Wicklungssystem in Nuten des magnetisch leitfähigen Körpers angeordnet ist, die zu dem Luftspalt weisen,
- wobei das Wicklungssystem pro Nut, insbesondere einen in Teilleiter unterteilten Leiterstab aufweist, dessen Teilleiter an einem ersten Ende des Leiterstabes mit zumindest einem Wechselrichtermodul elektrisch kontaktiert sind und dessen Teilleiter am anderen Ende, also zweiten Ende des Leiterstabes an der anderen Stirnseite des magnetisch leitfähigen Körpers des Stators mit den anderen Teilleitern der weiteren in den jeweiligen Nuten angeordneten Leiterstäben zu einem Kurzschlussring elektrisch zusammengefasst sind,
- wobei an und/oder innerhalb des Antriebs eine vorgebbare Anzahl von physikalischen und/oder chemischen Sensoren vorgesehen sind, die zumindest einem oder mehreren Abschnitten der rotatorische dynamoelektrische Maschine und/oder einem oder mehreren Wechselrichtermodulen zugeordnet sind,
- wobei dem Antrieb zumindest eine Auswerte- und/oder Regeleinheit zugeordnet ist, die zumindest eine Vorabauswertung von erfassten Daten der Sensoren ermöglicht,
- wobei eine Kommunikation von der Auswerte- und/oder Regeleinheit zu zumindest einer Cloud und/oder zu den Wechselrichtermodulen in vorgebbaren Zeitabschnitten und/oder Datenpaketen ermöglicht ist.

Die Lösung der gestellten Aufgabe gelingt auch durch ein Verfahren zum Betrieb und/oder Überwachung und/oder Simulieren eines erfindungsgemäßen Antriebs durch folgende Schritte:
- Erfassen von zumindest einigen der Daten im und am Antrieb mittels geeigneter Sensoren und/oder Erfassungsmittel,
- Übermittlung der erfassten Daten an zumindest eine Auswerte- und/oder Regeleinheit, wobei dort zumindest eine Vorabauswertung der Daten stattfindet,
- wobei abhängig von der Auswertung Betriebsparametern, wie Spannung und/oder Strom über das oder die Wechselrichtermodule bis auf Teilleiterebenen eines Stators einer dynamoelektrischen Maschine gezielt erfasst, ausgewertet, überwacht und geregelt werden.

Die Lösung der gestellten Aufgabe gelingt auch durch ein digitales Zwillingssystem eines erfindungsgemäßen Antriebs aufweisend:
- einen physischen Teil mit einem physischen Antrieb zum Antreiben einer Arbeitsmaschine),
- einen virtuellen Teil mit einem digitalen Abbild des Antriebs,
- Sensoren und Erfassungselemente zur Erfassung von Daten des Antriebs innerhalb und/oder außerhalb des Antriebs,
- Zumindest ein Datenübertragungselement zur Datenübertragung zwischen dem physischen Teil und dem virtuellen Teil,
- wobei die Daten durch das Datenübertragungselement zum virtuellen Teil übertragbar sind, wobei das digitale Abbild des Antriebs in Abhängigkeit der übermittelten Daten veränderbar ist.

Die Lösung der gestellten Aufgabe gelingt auch durch ein Computerprogrammprodukt zum Simulieren eines Betriebsverhaltens eines erfindungsgemäßen Antriebs, der eine Arbeitsmaschine antreibt.

Dadurch, dass nun die Erzeugung des magnetischen Feldes im Stator der dynamoelektrischen Maschine durch einen einzelnen Leiterstab (oder sogar einzelne Teilleiter oder Teilleiterbündel des Leiterstabes) und damit bis auf Nutebene oder Teilleiterstabebene mittels einer einem Wechselrichtermodul zugeordneten Software geregelt werden kann, ergeben sich völlig neue Möglichkeiten der digitalen Durchdringung eines Antriebs und damit der rotierenden elektrischen Maschine, der Wechselrichtermodule, und weiteren Komponenten des Antriebs, wie Lager, Kupplungen etc.

Elektrische Größen, wie Strom und Spannung des Antriebs werden bisher wegen der Zugänglichkeit meist nur an den Anschlussklemmen der rotierenden elektrischen Maschine abgegriffen. Diese summarische Messwerterfassung lässt z.B. zwar der Zustand einer Unsymmetrie in den elektrischen Messgrößen erkennen, aber durch die Topologie der dynamoelektrischen Maschine (zusammenhängende Wicklung etc.) kann darauf kaum Einfluss genommen werden.

Dies wird nunmehr durch einen erfindungsgemäßen Antrieb und dessen Verfahren nachhaltig verbessert, indem der Antrieb mit einer vorgebbaren Anzahl von physikalischen und chemischen Sensoren und Erfassungselementen "durchdrungen" ist. Dabei sind durch dementsprechende Sensoren oder andere Erfassungselemente folgende Daten für den Antrieb, insbesondere ortsabhängig und/oder zeitabhängig erfassbar:
- Messtechnische Erfassung der Umgebung, wie Luftfeuchte, Temperatur, Druck, Geräusche etc.
- Erfassung folgender Wicklungsparameter im Leiterstab oder den jeweiligen Teilleitern in einer oder mehreren Nuten des Stators, wie Temperatur, Teilentladung, angelegte Spannung, Stromfluss, Schwingungen, Magnetfeld, Netzrückwirkungen.
- Erfassung folgender Rotordaten, wie Temperatur, Magnetfeld Schwingungen, Vibrationen.
- Erfassung folgender Lagerdaten, wie Temperatur, Schmierzustand, thermisches oder rheologisches Verhalten eines Schmierstoffs, Schmierstoffdruck, Fließgeschwindigkeit des Schmierstoffs, Viskositätscharakteristik des Schmierstoffs, Teilentladungen im Schmierstoff, Schwingungen, Vibrationen.
- Aufnahme der Kühlungsdaten, wie Temperaturen in den jeweiligen Kühlkreisläufen, umgewälzte Kühlmediumsmengen.
- Erfassung von Daten der elektrischen rotierenden Maschine, wie Drehzahl und/oder ein Schlupf, Pendelmomente, Fundamentschwingungen, Überlast, Wirkungsgrad, Netzrückwirkungen.
- Auch die Werkstoffe des Antriebs, der dynamoelektrischen Maschine, Kupplung, Lager, etc., wie E-Modul, Steifigkeit, Anisotropie-Angabe, thermische Charakteristik, wie Wärmeausdehnungsverhalten können bereits in einem digitalen Zwilling hinterlegt sein.

Je nach Sensorarten bzw. physikalische oder chemische Parameter (Temperatur, Schwingung, Abrieb etc.) sind vorgebbare Abtastraten oder Zeitkonstanten in der Auswertung bzw. Regelung zu berücksichtigen.

Diese Daten werden einer Auswerteeinheit bzw. einer Regelung zugespielt, die auch über dementsprechende Datenverbindungen einem digitalen Zwilling des Antriebs zuspielbar sind.

Mit dem hier zugrundeliegenden Antriebskonzept, bei welchem die Durchflutung für jede Statornut der dynamoelektrischen Maschine über ein separates Wechselrichtermodul beeinflusst werden kann, lassen sich bis auf Nutebene - sofern nur ein Leiterstab pro Nut vorgesehen ist - die elektrischen Größen Strom und Spannung erfassen und bei Bedarf, abhängig von den Betriebsbedingungen, gezielt auswerten und regeln.

Sofern jedoch pro Nut der Leiterstab in mehrere Teilleiter aufgeteilt ist, die gegebenenfalls jeweils einem eigenen Wechselrichtermodul zugeordnet sind, lassen sich die elektrischen Größen Strom und Spannung sogar pro Teilleiter oder Teilleiterbündel erfassen und bei Bedarf, abhängig von den Betriebsbedingungen, sogar gezielt pro Teilleiter bzw. Teilleiterbündel auswerten und regeln.

Basierend auf den erfassten Daten lassen sich z.B. eine Polumschaltung oder eine Teilabschaltung (einzelne Leiterstäbe werden nicht oder nur geringer bestromt) der elektrischen Maschine erwirken. Ebenso können Redundanzanforderungen an den Antrieb erfüllt werden.

Des Weiteren kann eine unsymmetrische Stromverteilung in den Leiterstäben eingestellt werden, um einen ungewollten magnetischen Zug im Luftspalt der elektrischen Maschine entgegenzuwirken.

Bisher lieferten Sensoren (z.B. Temperatur, Schwingungen) lediglich summarische Werte, also Messwerte für Komponenten oder den ganzen Antrieb. Aufgrund des erfindungsgemäßen Antriebskonzepts können die Daten nicht feingranular erfasst, sondern auch dementsprechend ausgewertet und der Antrieb daraufhin dementsprechend ausgeregelt werden. Dies mündet beispielsweise darin, dass Strom und Spannung bis in die Nutebene oder sogar Teilleiterebene eines Leiterstabes erfasst und ausgeregelt werden kann.

Basierend auf der feingranularen Datenerfassung können auch Rückschlüsse auf Summationsbildung der Messwerte gezogen werden, was u.a. auch nachfolgenden Antriebstypen zugutekommt, indem lediglich eine notwendige Anzahl von Sensoren und Erfassungselementen im Antrieb vorgesehen werden muss.

Damit ist es auch möglich, die summarisch gebildeten Messwerte den singulären Messwerten gegenüberzustellen und durch gezielte Veränderung einzelner Nut-/Teilleiterdurchflutungen die Auswirkung auf die Komponente, den ganzen Antrieb und eine Arbeitsmaschine zu erfassen und z.B. den Summenschwingwert am Lagerschild, einer Kupplung oder des Gehäuses durch gezieltes Ausregeln der Nut-/Teilleiterdurchflutungen auf ein Minimum einzustellen.

Grundsätzlich lassen sich somit die Daten eines an einer beliebigen Stelle an und/oder im Antrieb positionierten Sensors der Regelung übermitteln, in einer Regelstrategie berücksichtigen, über das Wechselrichtermodul für den Leiterstab oder den Teilleiter oder das Teilleiterbündel in der Nut den erforderlichen Strom und/oder erforderliche Spannung vorgeben und damit das ganze Antriebs- und/oder Maschinenverhalten dahingehend anzupassen.

Aufgrund der Vielzahl der Reglungsmöglichkeiten dieses Antriebs lassen sich dementsprechend viele Sensoren für eine Echtzeitüberwachung am und im Antrieb positionieren. Diese Sensoren liefern damit auch Daten für einen digitalen Zwilling und/oder auch Wartungsintervalle, und gegebenenfalls einer Optimierung für Nachfolgemodelle dieser Antriebe.

Damit ist gegebenenfalls bei Nachfolgemodellen - die sich auf den gleichen digitalen Zwilling berufen - weniger Aufwand zur Datenerfassung notwendig.

Zusätzlich bzw. dadurch lassen sich durch die Kenntnis der elektrischen Größen auf Nutebene/Teilleiterebene die Bauteilbeanspruchungen (Schwingungsdämpfer am Motorfuß; Lagerbelastungen; Belastungen der Kupplung zur Arbeitsmaschine etc.) sehr eng eingrenzen, was zu einer erheblichen verbesserten Zustandsanalyse und Lebensdauerbewertung führt. Wartungsintervalle können somit ausgereizt werden.

Die der Auswerte- und/oder Regelungseinheit des Antriebs zugeführten sämtliche oben ausgeführte Daten des Antriebs, der Lager, der Kupplung, der Arbeitsmaschine, Temperaturen von Kühlmedien (nicht dargestellt), Schallemissionen, Torsionsschwingungen der Welle etc., werden ergänzend oder teilausgewertet einem digitalen Zwilling zur Verfügung gestellt. Die Daten werden nicht nur von der Auswerte- und/oder Regelungseinheit des Antriebs zum digitalen Zwilling überragen, sondern es ist auch möglich, aus dem digitalen Zwilling erforderliche Maßnahmen des Antriebs einzuleiten. Es liegt somit eine bidirektionale Datenverbindung vor, der eine Rückkopplung vom und zum Antrieb gestattet, und dessen Arbeitsweise aktiv überwacht und beeinflusst werden kann.

Alternativ dazu kann aus einer vergleichsweise geringen Anzahl von Sensoren - beispielsweise nur an der Kupplung - mittels einer KI (Künstliche Intelligenz) (gegebenenfalls gespeist aus dem digitalen Zwilling einer anderen Vorgängermaschine (lernende Maschine)) auf die Betriebsdaten dieses aktuellen Antriebs geschlossen werden.

Mit der Digitalisierung des Antriebs u.a. bis auf Nutebene/Teilleiterebene und der Möglichkeit in das Maschinenverhalten regelnd einzugreifen, ergeben sich eine Reihe von Vorteilen für die elektrische Maschine und/oder eine Arbeitsmaschine, wie Minimieren des Schwingungsverhaltens, Minimieren des Geräuschverhaltens, Maximieren des Wirkungsgrades, Minimieren von Pendelmomenten, Optimieren der Gleichlaufeigenschaften, Verbesserung der Analyse von Bauteilbeanspruchungen der Komponenten und Verbesserung der Verfügbarkeitsbeurteilung der Komponenten des Antriebs.

Ein derartiges Verfahren zum Betreiben eines derartigen Antriebs mit einer elektrischen rotierenden Maschine, insbesondere eines Motors oder eines Generators, wird beispielsweise in einem industriellen Umfeld mit zahlreichen automatisierten Prozessen eingesetzt, um Wartungsintervalle zu koordinieren oder bei Bedarf frühzeitig Gegenmaßnahmen einzuleiten.

Zur Ermittlung des Verhaltens des Antriebs mit seinen Komponenten und seiner Arbeitsmaschine werden in der Cloud leistungsfähige Modelle dieser Komponenten, z.B. der elektrischen rotierenden Maschine, bereitgestellt, welches beispielsweise mit einem thermischen Simulator, insbesondere auf Basis der Finite-Elemente-Methode, berechnet und/oder durch Messungen empirisch ermittelt wird.

Die Cloud ist insbesondere eine IT-Infrastruktur, in der beispielsweise Speicherplatz, Rechenleistung und Anwendungssoftware als Dienstleistung über das Internet bereitgestellt werden.

Mit Hilfe der in der Cloud, aufgrund der aus dem Antrieb bereitgestellten Daten, können dementsprechende Modelle bereitgestellt werden und daraus Aktionen für den aktuellen Antrieb eingeleitet werden.

Alternativ wird aus der Cloud ein einfaches mathematisches Modell, welches beispielsweise aus einem komplexen physikalischen Modell approximiert wird, bereitgestellt, welches mit einem geringen Rechenaufwand in der Auswerte- und/oder Regeleinheit weiterverarbeitet wird. Ein Mittel zur Ermittlung von erforderlichen Antriebsparametern ist beispielsweise eine Recheneinheit, die insbesondere einen Mikroprozessor mit einem Speicher umfasst.

Die jeweiligen Modelle (Thermisches Modell, Schwingungsmodell, Modell der mechanischen Belastungen, etc.) des Antriebs oder dessen Komponenten können in der Cloud bzw. digitalen Zwilling bereitgestellt werden, so dass komplexe Berechnungen zumindest teilweise in der Cloud stattfinden. Damit ist die Leistungsaufnahme der Auswerte- und/oder Regeleinheit vergleichsweise gering.

Besonders vorteilhaft wird die durch die Sensoren und Erfassungselemente aufgenommenen Daten drahtlos an die Auswerteeinheit übertragen. Eine drahtlose Übertragung dieser Daten erfolgt beispielsweise über Bluetooth LE oder RFID. Durch eine drahtlose Übertragung der Sensordaten wird der eigentliche Betrieb, beispielsweise durch störende Kabel, nicht beeinflusst. Darüber hinaus sind, insbesondere passive, drahtlose Temperatursensoren kostengünstig und einfach an und in der Maschine anzubringen.

Mittel zur Bestimmung weiterer Betriebsparameter sind beispielsweise zumindest ein Sensor zur Messung eines physikalischen Parameters der elektrischen rotierenden Maschine, und ein Mikroprozessor, der aus dem physikalischen Parameter einen Betriebsparameter ermittelt. Durch das Einbeziehen zusätzlicher Betriebsparameter werden die Genauigkeit und damit die Zuverlässigkeit der Überwachung des Antriebs erhöht.

Bei parametrierbaren Modellen wird durch das Einbeziehen weiterer diesbezüglicher Betriebsparameter die Genauigkeit der jeweiligen Ermittlung erhöht.

Die Aufgabenstellung wird ebenso durch ein erfindungsgemäßes Computerprogrammprodukt gelöst. Das Computerprogrammprodukt ist dazu ausgebildet, ein Betriebsverhalten eines Antriebs zu simulieren, der in einer Industrie-Applikation eingesetzt werden kann. Dazu ist der Antrieb in seinem Aufbau im Computerprogrammprodukt abgebildet und weist als Ganzes und/oder komponentenweise einstellbare Eigenschaften auf, die für das Betriebsverhalten relevant sind.

Das Computerprogrammprodukt kann ein physikalisches Modell umfassen, mit dem das Betriebsverhalten des Antriebs unter Berücksichtigung der einstellbaren Eigenschaften nachstellbar ist. Zu einem Einstellen der Eigenschaften kann das Computerprogrammprodukt über zumindest eine Datenschnittstelle verfügen, über die die Eigenschaften durch eine Benutzereingabe und/oder eine Eingabe aus einem weiteren simulationsgerichteten Computerprogrammprodukt einstellbar ist.

Gleichermaßen ist über die Datenschnittstelle eine Angabe zum vorliegenden Betriebszustand vorgebbar, beispielsweise vorliegende Axialkräfte, Radialkräfte, Kippmomente, und/oder Drehzahlen der Welle.

Zum Betriebsverhalten beispielsweise der Wellenanordnung mit den Lagern, als Teil des Antriebs kann eine örtlich aufgelöste Schmierstofffilmdicke, eine örtlich aufgelöste Schmierstofftemperatur, ein Schmierstoffverlust, eine vorliegende mechanische Beanspruchung, und/oder ein Verschleißbeitrag gemäß einem Schädigungsmodell gehören.

Das simulierte Betriebsverhalten ist über eine weitere Datenschnittstelle des Computerprogrammprodukts an einen Benutzer und/oder ein weiteres simulationsgerichtetes Computerprogrammprodukt ausgebbar. Mittels des erfindungsgemäßen Computerprogrammprodukts ist vor allem ein derartiger Antrieb für die Verwendung in einer Industrie-Applikation per Simulation optimierbar.

Das Computerprogrammprodukt kann beispielsweise auch als sogenannter digitaler Zwilling ausgebildet sein.

Ein digitaler Zwilling im erfindungsgemäßen Sinne ist eine digitale Repräsentanz eines materiellen oder immateriellen Objekts - also des Antriebs mit seinen Komponenten, wie dynamoelektrische Maschinen, Wechselrichtermodule, Lager, Kupplungen etc.- aus der realen Welt in der digitalen Welt. Digitale Zwillinge ermöglichen einen übergreifenden Datenaustausch. Sie sind mehr als reine Daten und weisen Modelle (z.B. thermisches Modell, Schwingungsmodell, Magnetfeldmodell, Kräftemodell etc.) des repräsentierten Antriebs oder dessen Komponenten auf und können daneben Simulationen, Algorithmen und Services enthalten, die Eigenschaften oder Verhalten des repräsentierten Antriebs beschreiben, überwachen, beeinflussen, oder Dienste darüber anbieten.

Es geht dabei auch um die Kommunikation zwischen dem realen und virtuellen Antrieb. Es fließen somit Daten vom realen zum virtuellen Antrieb, als auch Informationen vom virtuellen Antrieb zum realen Antrieb oder dem dadurch beeinflussbaren Prozess. Aus dem Vergleich und der Analyse der Abweichungen zwischen den realen und virtuellen Antrieb können gegebenenfalls die realen Antriebe wieder aneinander angepasst und damit deren beeinflussbaren Prozesse, wie Kompressoren oder Förderbänder entsprechend reguliert werden.

Eine Möglichkeit dabei ist, dass das virtuelle Objekt, also der virtuelle Antrieb führend in diesem Digitalen Zwillings-Konzept ist, dem sich das reale Objekt, also der reale Antrieb anpassen muss. Bei technischen Anlagen kann aus den auftretenden Abweichungen eine Nachjustierung einer Anlagenkomponente oder beispielsweise auch eine vorausschauende Instandhaltung (predictive maintenance) abgeleitet werden.

Damit umfasst die erfindungsgemäße Definition des Digitalen Zwillings auch die Steuerung auf Basis von Echtzeitdaten des Antriebs oder dessen Komponenten, so dass folgende an sich bekannte Archetypen vorliegen: Basic Digital Twin, Enriched Digital Twin, Autonomous Control Twin, Enhanced Autonomous Control Twin, Exhaustive Twin.

Der Antrieb mit seinem digitalen Zwilling ist damit Teil des Industrie 4.0 Konzepts, das folgenden Gestaltungsprinzipien aufweist:
- Vernetzung: es wird eine Vernetzung des gesamten Antriebs von Maschinen, Geräten, Sensoren und Menschen angestrebt, vorzugsweise über das Internet der Dinge.
- Informationstransparenz: Sensordaten sollen Informationssysteme digitaler Modelle erweitern, um so ein virtuelles Abbild der realen Antriebswelt dieses Antriebs bzw. Antriebsstrang zu erstellen.
- Des Weiteren soll damit eine technische Assistenz gewährleistet werden, mit der fundierte Entscheidungen über die Betriebsweise des Antriebs getroffen und auftretende Probleme schneller gelöst werden können.
- Außerdem soll es ermöglicht werden, dass auch dezentrale Entscheidungen innerhalb des Antriebs getroffen werden. Nur in festlegbaren Ausnahmefällen, z.B. bei Störungen oder Zielkonflikten im Antriebsstrang, wird eine höhere Instanz kontaktiert.

Dezentrale Entscheidungen sind, beispielsweise bei Anstieg von Temperaturen, die Kühlung zu forcieren, indem ein Fremdlüfter zugeschaltet oder mit höherer Drehzahl betrieben wird. Entscheidungen, die beispielsweise von einer höheren Instanz getroffen werden, sind die Festlegung des Betriebsverhaltens der dynamoelektrischen Maschine bei lokaler Feststellung von Teilentladungen.

Erfindungsgemäß ist der Antrieb in das Internet der Dinge (Internet of Things, IoT) eingebettet. Unter IoT wird dabei eine globale Infrastruktur von Informationsgesellschaften bezeichnet, die es ermöglicht, physische und virtuelle Objekte miteinander zu vernetzen und die Antriebe durch Information- und Kommunikationstechnologien zusammenarbeiten zu lassen.

Das Internet der Dinge bezeichnet die Verknüpfung eindeutig identifizierbarer physischer Objekte mit einer virtuellen Repräsentation in einer Internet-ähnlichen Struktur.

Ziel des IoT ist es, automatisch relevante Informationen aus der realen Welt des Antriebs zu erfassen, miteinander zu verknüpfen und im Netzwerk verfügbar zu machen. Ziel ist also, dass die dynamoelektrische Maschine, die Wechselrichtermodule etc. ihre Zustandsinformationen für die Weiterverarbeitung im Netzwerk zur Verfügung stellen. Das Netzwerk kann lokal, als VPN in sich geschlossen oder auch mit dem Internet über separat abgesicherte Firewalls verbunden sein.

Solche Zustandsinformationen können Informationen über die aktuelle Nutzung, über Alterung, aber auch über besondere Umweltbedingungen oder Betriebsverhalten an dem Ort des Antriebs sein. Solche Informationen können zur Verbesserung der Nutzbarkeit des Antriebs ausgewertet werden (Früherkennung von Wartung oder Austausch etc.).

Der Antrieb mit seinem digitalen Zwilling bildet ein sogenanntes cyber-physisches System. Dies bezeichnet einen Verbund informatischer, softwaretechnischer Komponenten mit mechanischen und elektronischen Teilen, die über eine Dateninfrastruktur, wie z.B. das Internet, kommunizieren. Die Ausbildung eines derartigen cyber-physischen Systems entsteht aus der Vernetzung eingebetteter Systeme durch drahtgebundene oder drahtlose Kommunikationsnetze.

Dadurch, dass die Daten des Antriebs und/oder seiner Komponenten dem virtuellen Teil übermittelt werden, kann, z.B. durch künstliche Intelligenz (KI), der Betrieb des Antriebs für unterschiedliche Belastungszustände durch gezielten Eingriff über die einzelnen Wechselrichtermodule in den magnetfeldbildenden Strom auf den jeweiligen Nutebenen optimiert werden.

Die jeweilige Datenübermittlung von Komponenten des Antriebs kann ständig und/oder auch zyklisch erfolgen. Das jeweilige Datenübertragungselement überträgt diese Daten, woraufhin das digitale Abbild des Antriebs und somit das Softwareobjekt in Abhängigkeit der Daten verändert wird. Das jeweilige Softwareobjekt kann z.B. einmal pro Sekunde verändert werden. Der Zyklus kann jedoch auch kürzer oder länger sein. Besonders geeignet ist ein Zyklus von min. 1 ms und max. 100 ms.

Der Einsatz eines derartigen Antriebs findet beispielsweise bei Band-/Drahtzuganlagen, im maritimen Bereich oder Testständen statt.

Beim Einsatz in einer Band-/Drahtzuganlage sind höchste Anforderungen des Antriebs an Gleichlaufgüte und konstantes Drehmoment bei hoher Dynamik gefordert. Hier können auf die im Prozess gewonnen Größen z.B. zur Materialdicke und die Gleichlaufschwankungen durch die Regelungssoftware direkt über die für jede Nut vorhanden Stromrichter mit hoher Abtastung Einfluss genommen und ggf. unmittelbar korrigiert werden.

Bei der Verwendung als maritimer Antrieb, bis in den MW-Bereich stehen je nach Antriebsaufgabe der kompakte Maschinenaufbau, das Geräusch- und Schwingungsverhalten sowie die Energieeffizienz und hohe Verfügbarkeit im Vordergrund. Durch Rückführung von Sensoriken z.B. an der Schiffsaußenwand (Schwingung, Körperschall) lassen sich über die Nutstromrichter minimale antriebsseitige Auswirkungen einstellen. Zum Erreichen einer optimale Energieeffizienz können je nach Leistungsanforderung einzelne Nuten ab und bei Bedarf wieder zuschalten werden. Ebenso ermöglich gezieltes Abschalten von fehlerhaften Nutstromrichtern den Weiterbetrieb des Antriebs mit unveränderter (Teillast) oder verringerter Antriebsleistung (Bemessungslast).

Ist der Antrieb Teil eines Testprüfstandes (Automotiv, Getriebe etc.) können die hohen Anforderungen an die Gleichlaufgüte (geringe Pendelmomente), den Drehzahlstellbereich und die Drehdynamik erfüllt werden. Ein erweiterter Drehzahlstellbereich ergibt sich bereits aus dem konstruktiven Aufbau des Antriebs. Durch den Wegfall der Wickelköpfe kann der Lagerabstand verringert und damit der Stellbereich erweitert werden. Zusätzlich können durch die gezielte Beeinflussung der Schwingungsanregung über die Nutstromrichter Resonanzen bedämpft, d.h. Sperrbereiche umgangen werden.

Die Erfindung sowie weitere vorteilhafte Ausgestaltungen der Erfindung werden anhand prinzipiell dargestellter Ausführungsbeispiele näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben aufgeführten Merkmalen kombinierbar. Es zeigen im Einzelnen:
- FIG 1: eine teilperspektive Ansicht eines Antriebs,
- FIG 2: einen prinzipiellen Längsschnitt eines Antriebs,
- FIG 3: Einbettung eines Antriebs in eine Digitalisierungsumgebung.

Es sei angemerkt, dass sich Begriffe wie "axial", "radial", "tangential" etc. auf die in der jeweiligen Figur bzw. im jeweils beschriebenen Beispiel zum Einsatz kommende Achse 11 beziehen. Mit anderen Worten beziehen sich die Richtungen axial, radial, tangential stets auf eine Achse 11 des Rotors 8 und damit auf die entsprechende Symmetrieachse des Stators 2. Dabei beschreibt "axial" eine Richtung parallel zur Achse 11, "radial" beschreibt eine Richtung orthogonal zur Achse 11, auf diese zu oder auch von ihr weg, und "tangential" ist eine Richtung, die in konstantem radialem Abstand zur Achse 11 und bei konstanter Axialposition kreisförmig um die Achse 11 herum gerichtet ist. Der Ausdruck "in Umfangsrichtung" ist mit "tangential" gleichzusetzen.

In Bezug auf eine Fläche, bspw. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 8 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

Die im Folgenden beschriebenen Ausführungen können beliebig kombiniert werden. Ebenso sind auch Einzelmerkmale der jeweiligen Ausführungen kombinierbar, ohne das Wesen der Erfindung zu verlassen.

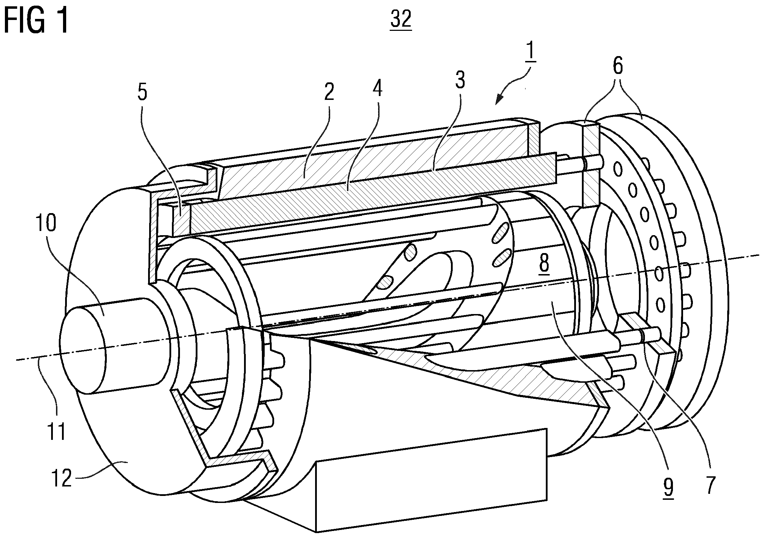

FIG 1 zeigt in perspektivischer Darstellung den prinzipiellen Aufbau einer erfindungsgemäßen dynamoelektrischen Maschine 1. Auf der einen Stirnseite des magnetischen leitfähigen Körpers eines Stators 2 sind Wechselrichtermodule 6 angeordnet. Auf der anderen Stirnseite des magnetischen leitfähigen Körpers des Stators 2 befindet sich ein Kurzschlussring 5 des Stators 2, der die einzelnen, in Nuten 3 angeordneten Leiterstäbe 4 des Stators 2, elektrisch kontaktiert und kurzschließt. Der magnetisch leitfähige Körper des Stators 2 ist als axial geschichtetes Blechpaket aufgebaut. Radial durch einen Luftspalt 22 vom Stator 2 beabstandet ist ein Rotor 8 angeordnet. Dieser Rotor 8 ist drehfest mit einer um eine Achse 11 drehbaren Welle 10 verbunden. Der Rotor 8 ist in diesem Fall mit einem Kurzschlusskäfig 9 ausgeführt. Der magnetisch leitfähigen Körper des Rotors 8 ist als axial geschichtetes Blechpaket aufgebaut.

Die Wechselrichtermodule 6 sind ebenfalls, sofern mehrere Wechselrichtermodule 6 pro Leiterstab vorhanden sind, axial hintereinander geschichtet angeordnet. Über nicht näher dargestellte Anschlusselemente 7, die dementsprechend erforderliche Stromstärken (> 1000A) als Betriebsstrom führen können, sind die Wechselrichtermodule 6 mit ihren jeweiligen Leitern, insbesondere Leiterstäben 4 bzw. Teilleitern, elektrisch, insbesondere niederohmig kontaktiert.

Schalten von derartig hohen Strömen führt zu thermischer Belastung des jeweiligen Wechselrichtermoduls 6.

Zwischen zwei oder mehreren axial und/oder radial angeordneten Wechselrichtermodulen 6 sind somit optional Kühlelemente zwischen den Wechselrichtermodulen 6 vorgesehen sind, die zumindest abschnittsweise in wärmeleitendem Kontakt mit den benachbarten Wechselrichtermodulen 6 stehen.

Die Welle 10 ist über Lager 26 und Lagerschilde an einem Gehäuse 23 und/oder einer Abdeckung der dynamoelektrischen Maschine 1 abgestützt.

Im Blechpaket des Stators 2 können auch axial verlaufende Kühlkanäle vorgesehen sein. Auch im Rotor 8 können in dessen Blechpaket, radial innerhalb des Blechpakets des Kurzschlusskäfigs 9 axial verlaufende Kühlkanäle vorgesehen sein.

Auf der einen Stirnseite des Stators 2 sind an den aus dieser Stirnseite axial ragenden Enden der Leiterstäbe 4, bzw. deren Teilleiter die jeweiligen Wechselrichtermodule 6 elektrisch kontaktiert.

Jeder Teilleiter oder jedes Teilleiterbündel eines Leiterstabes 4 ist an ein separates Wechselrichtermodul 6 angeschlossen.

Die Teilleiter verlaufen zumindest innerhalb des magnetisch leitfähigen Körpers des Stators 2 parallel.

Die Teilleiter können ebenso zumindest innerhalb des magnetisch leitfähigen Körpers des Stators 2 ihre in der Nut 3 vorhandene Position im axialen Verlauf in der Nut 3 wechseln, insbesondere verroebelt angeordnet sein.

Die Teilleiter sind massiv oder als Hohlleiter ausgeführt.

Die Teilleiter sind in Umfangsrichtung betrachtet jeweils zumindest abschnittsweise mit einer Isolationsschicht versehen.

Der Kurzschlussring 5 des Stators 2, als auch der Kurzschlussring des Rotors 8 können aus Teilscheiben aufgebaut sein. Dies ermöglicht beispielsweise einer Luftströmung 18 radial zwischen diesen Teilscheiben der Kurzschlussringe, von Stator 2 und Rotor 8 zu strömen und so aufgrund der größeren Oberflächen dieser Kurzschlussringe sowohl diese Kurzschlussringe als auch die dort vorhandenen Abschnitte der Leiterstäbe 4 und/oder den Kurzschlusskäfig 9 des Rotors 8 effizient zu kühlen.

Der dafür erforderliche Luftstrom kann durch einen Fremdlüfter 21 und/oder einen prinzipiell dargestellten Eigenlüfter 13 erzeugt werden, der drehfest mit der Welle 10 verbunden ist. Der radial geförderte Luftstrom wird dabei u.a. über einen axialen Kühlkanal des Rotors 8 bezogen, wobei damit auch das Blechpaket des Rotors 8 gekühlt wird.

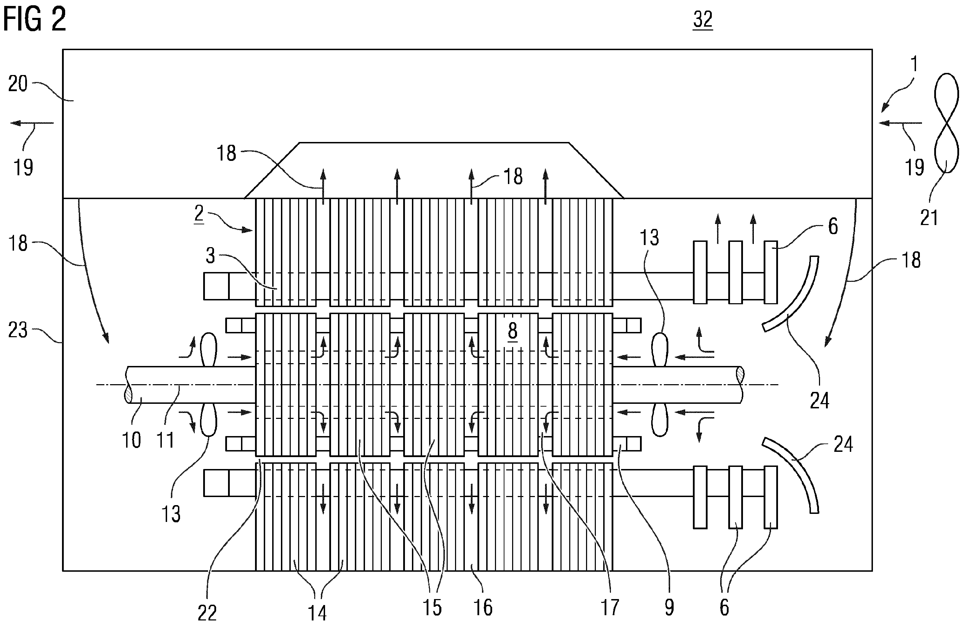

In einer Ausführung, z.B. nach FIG 2, ist das Blechpaket von Stator 2 und Rotor 8 in axial geschichtete Teilblechpakete 14, 15 unterteilt, wobei insbesondere Abstandshalter des Rotors 8 als lüfterähnliche Elemente ausgebildet sein können, die bei Drehung des Rotors 8 eine Eigenlüfter-Funktion generieren und somit unter anderem Kühlluft aus einem Kanal, zumindest zum Teil, radial durch den Schlitz 26 des Rotors 8 und den Schlitz 17 des Stators 2 fördern. Kühlluft für die Schlitze 16 des Stators 2 kann auch über den Luftspalt 22 bereitgestellt werden.

Um eine verbesserte Kühlwirkung zu erzielen, können die Kurzschlussringe von Stator 2 und Rotor 8 axial versetzt angeordnet sein.

Auch ein axialer Abstand zwischen den Wechselrichtermodulen 6 ermöglicht effiziente Luftkühlung.

Grundsätzlich kann die Kühlung dieses Antriebs, also der dynamoelektrischen Maschine 1, mit den Wechselrichtermodulen 6 offen ausgebildet sein (Wärmeaustausch erfolgt mit der Umgebungsluft, z.B. über Luftschlitze im Gehäuse der Maschine mittels Umgebungsluft) . Die Kühlung dieses Antriebs, also der dynamoelektrischen Maschine 1, mit den Wechselrichtermodulen 6 kann alternativ dazu auch über einen geschlossenen Innenkühlkreislauf (Primärkreislauf 18) innerhalb des Gehäuses 23 erfolgen, dabei erfolgt die Rückkühlung des Innenkühlkreislaufes (Primärkreislauf 18) durch eine Sekundärkühleinrichtung (Sekundärkühlkreislauf 19) .

FIG 2 zeigt einen geschlossenen Innenkühlkreislauf (Primärkreislauf 18) innerhalb des Gehäuses 23 mit einer Sekundärkühleinrichtung (Aufsatzkühler 20) zur Kühlung des Luftstromes des Primärkreislaufes 18.

Dabei kann der Aufsatzkühler 20 als Röhrenkühler oder Plattenkühler ausgeführt sein, wobei in diesem Fall eine primärseitige X-Belüftung des Antriebs (insbesondere dynamoelektrische Maschine 1, mit den Wechselrichtermodulen 6) vorliegt.

Als Primärkreislauf 18 wird unabhängig von ein- oder zweiseitiger Belüftung (Z- oder X-Belüftung) innerhalb der dynamoelektrischen Maschine 1 ein gasförmiger Kühlstrom, insbesondere ein Luftstrom bzw. eine Luftstromverteilung, bezeichnet, der Komponenten der dynamoelektrischen Maschine 1, wie Wechselrichtermodule 6, Kurzschlussringe von Stator 2 und/oder Rotor 8, magnetisch leitfähige Körper von Stator 2 und/oder Rotor 8, (z.B. Blechpakete oder Teilblechpakete 14, 15), Leiter 8, zumindest Gehäuseabschnitte, Lagerschilde und Lager 26 anströmt und/oder umströmt und/oder durchströmt und als geschlossener Kreislauf (Innenkühlkreislauf bzw. Primärkreislauf 18) ausgeführt ist, der keinen strömungsmäßigen Kontakt nach außen hat. Der Luftstrom des Primärkreislaufes 18 wird durch einen oder mehrere Eigenlüfter 13 und/oder Fremdlüfter 21 drückend oder saugend innerhalb des Gehäuses 23 der dynamoelektrischen Maschine 1 generiert.

Als Sekundärkreislauf 19 wird ein Kühlstrom, Flüssigkeitskühlstrom (z.B. auf der Basis von Wasser) oder ein gasförmiger Kühlstrom (z.B. auf der Basis von Luft) in einem Aufsatzkühler 20 bezeichnet, der wärmetechnisch mit dem Kühlstrom des Primärkreislaufes 18 gekoppelt ist, ihn also rückkühlen kann, wobei der Kühlstrom bzw. eine Kühlstromverteilung, insbesondere Luft des Sekundärkreislaufes 19 durch Eigen- und/oder Fremdlüfter oder dementsprechende Pumpen, drückend oder saugend generiert wird.

Vorzugsweise ist der Sekundärkreislauf 19 offen ausgeführt, d.h. er wird mit Umgebungsluft betrieben, die Luft aus der Umgebung ansaugt, durch das Medium des Primärkreislaufs 18 erwärmt und anschließend an die Umgebung wieder abgegeben wird. Damit kann die dynamoelektrische Maschine 1, mit einem derartigen Aufsatzkühler 20 ausgestattet, an nahezu beliebigen Orten aufgestellt werden, ohne eine Verschmutzung des Inneren des Antriebs (dynamoelektrische Maschine 1, mit den Wechselrichtermodulen 6) zu befürchten. Es müssen lediglich die Wärmetauscher des Aufsatzkühlers 20, wie Röhren oder Platten gereinigt werden. Ergänzend sind gegebenenfalls vor den Eingang des Sekundärkreislaufs 19 Filtermatten oder Luftfilter für stark verschmutzte Luft vorzusehen.

Dabei kann sich jeder Luftstrom sowohl des Primärkreislaufes 18 als auch des Sekundärkreislaufes 19 zumindest abschnittsweise innerhalb seines Strömungsverlaufs in parallele Strömungspfade aufteilen, insbesondere während des Wärmeaustausches zwischen Primärkreislauf 18 und Sekundärkreislauf 19, was der Effizienz der Rückkühlung steigert.

Dies geschieht vorteilhafterweise durch Leitvorrichtungen 24 in der dynamoelektrischen Maschine 1 und/oder in dem als Aufsatzkühler 20 ausgebildeten Sekundärkreislauf 19, um die Kühlwirkung der von Primärkreislauf 18 und/oder Sekundärkreislauf 19 zu optimieren.

Der Innenkühlkreislauf der dynamoelektrischen Maschine 1, mit den Wechselrichtermodulen 6 - also der Primärkreislauf 18 - kann als Z- oder X-Belüftung ausgelegt sein.

Als einseitige Belüftung (Z-Belüftung) des Innenkühlkreislaufs wird die Belüftung der dynamoelektrischen Maschine 1 bezeichnet, bei der ein Luftstrom (Primärkreislauf 18) auf einer Seite der dynamoelektrischen Maschine 1 in einen Wickelkopfraum eingespeist wird und danach über verschiedene parallele und/oder serielle Strömungskanäle - u.a. Wickelkopf, Rücken des Blechpakets des Stators 2, radiale Kühlkanäle 16, 17, Luftspalt 22, etc. - zu dem anderen Wickelkopfraum gelangt. Von dort gelangt die erwärmte Luft des Primärkreislaufes 18 über einen oder mehrere Lüfter - Eigenlüfter oder Fremdlüfter - angetrieben, in den Aufsatzkühler 20 zur Rücckühlung.

Die Luft des Primärkreislaufes 18 wird somit über einen Wickelkopfraum in das Gehäuse 23 der dynamoelektrischen Maschine 1 geführt und dort u.a. über den Wickelkopf und die Blechpakete und/oder den Luftspalt 22 in den anderen Wickelkopfraum geführt. Von dort wird der nun gegebenenfalls weiter erwärmte Kühlluftstrom über den Aufsatzkühler 20, mittels des Sekundärkreislaufes 19 rückgekühlt.

Als zweiseitige Belüftung (X-Belüftung) des Innenkühlkreislaufs wird die Belüftung der dynamoelektrischen Maschine 1 bezeichnet, bei der ein Luftstrom (Primärkreislauf 18) auf beiden Seiten der dynamoelektrischen Maschine 1 in den jeweiligen Wickelkopfraum eingespeist wird und danach über verschiedene parallele und/oder serielle Strömungskanäle - u.a. Wickelkopf, Rücken des Blechpakets des Stators 2, radiale Kühlkanäle 16, 17, Luftspalt 22, etc. - im Wesentlichen mittig am Rücken des Statorblechpakets in den Aufsatzkühler 20 gelangt. Die erwärmte Luft des Primärkreislaufes 18 wird somit durch einen oder mehrere Lüfter - Eigenlüfter oder Fremdlüfter - in den Aufsatzkühler 20 zur Rückkühlung gefördert. Dementsprechende, insbesondere stellbare Blendenelemente, wie Düsenelemente verbessern den Strömungsverlauf des Primärkreislaufes 18, indem besondere "hot-spots" (z.B. Wechselrichtermdule 6) innerhalb des Primärkreislaufes 18 gezielt strömungstechnisch angesteuert werden können.

Der Sekundärkreislauf 19 - also der Aufsatzkühler 20 - der dynamoelektrischen rotatorischen Maschine 1 kann als ein Röhrenkühler oder Plattenkühler ausgebildet sein, dessen Kühlmedium Luft oder Wasser ist. Derartige geschlossene Primärkühlkreisläufe 18 sind sekundärseitig am besten mit folgenden Aufsatzkühlern 20 umsetzbar (Luft-Luft-Kühlaggregate via Röhren- oder Plattenkühler; oder Luft-Flüssigkeits-Kühlaggregate via zumindest teilumfänglichem Mantel- oder Aufsatzkühler).

Der Aufsatzkühler 20 weist dabei nicht weiter dargestellte Kanäle bzw. Strömungspfade von Primärkreislauf 18 und Sekundärkreislauf 19 auf. Er weist außerdem dementsprechende korrespondierende Öffnungen mit dem Gehäuse 23 auf, um die jeweiligen Kühlprinzipien zu realisieren.

Verstellbare Leitvorrichtungen 24 wie Düsenelemente oder Blendenelemente führen und/oder verzweigen den Luftstrom des Primärkreislaufes 18 innerhalb des Gehäuses 23 zu den jeweiligen Wärmequellen.

Auch im Sekundärkreislauf 19 können Leitvorrichtungen des Kühlluftstromes vorgesehen sein.

Ein derartiger Antrieb, also die dynamoelektrische Maschine 1, mit über Wechselrichtermodulen 6 separat ansteuerbaren Leiterstäben 4 bzw. Teilleitern eignet sich vor allem für industrielle Anlagen, wo stark wechselnde Betriebszustände erforderlich sind, und wo innerhalb kürzester Zeit regelungstechnische Reaktionen des Antriebs notwendig sind. (Anpassung eines magnetischen axialen oder radialen Zugs, Reaktion auf Schwingungen des Rotors, Drehzahlanpassungen, Redundanz der Maschine 1 bei Ausfall eines Leiterstabes 4 bzw. dessen Wechselrichtermodule 6 etc.).

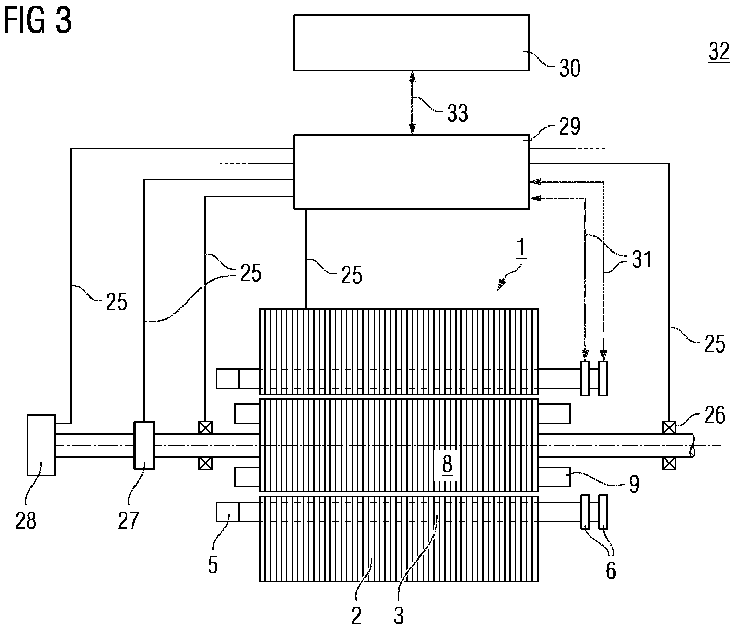

FIG 3 zeigt einen Antrieb, also die dynamoelektrische Maschine 1, mit ihren Wechselrichtermodulen 6, wobei die Welle 10 über eine Kupplung 27 eine nicht näher dargestellte Arbeitsmaschine 28 antreibt. Über Datenverbindungen 25 werden die von Sensoren aufgenommenen Daten des Antriebs kabelgebunden oder kabellos an eine Regelung 29 weitergeleitet.

Abtastraten oder Zeitkonstanten in der Auswertung bzw. Regelung sind vorgebbar und werden je nach Sensorarten (Erfassung von physikalischen oder chemischen Parametern wie Temperatur, Schwingung, Abrieb etc.) berücksichtigt.

Grundsätzlich lassen sich somit die Daten eines an einer beliebigen Stelle an und/oder im Antrieb positionierten Sensors der Regelung übermitteln, in einer Regelstrategie berücksichtigen, und daraus resultierend dem oder den zugewiesenen Wechselrichtermodulen 6 vorzugeben und damit das ganze Antriebs- und/oder Maschinenverhalten dahingehend auszuregeln.

Aufgrund der Vielzahl der Reglungsmöglichkeiten dieses Antriebs lassen sich dementsprechend viele Sensoren für eine Echtzeitüberwachung am und im Antrieb positionieren.

Diese Sensoren liefern damit auch Daten für einen digitalen Zwilling 30 oder auch Wartungsintervalle, und gegebenenfalls Daten einer Optimierung für Nachfolgemodelle dieser Antriebe.

Zusätzlich bzw. dadurch lassen sich durch die Kenntnis der elektrischen Größen auf Nutebene oder sogar Teilleiterebene die Bauteilbeanspruchungen (z.B. Schwingungsdämpfer am Motorfuß; Belastungen der Lager 26; Belastungen der Kupplung 27 zur Arbeitsmaschine etc.) sehr eng eingrenzen, was zu einer erheblichen verbesserten Zustandsanalyse und Lebensdauerbewertung führt. Wartungsintervalle des Antriebs können damit ausgereizt werden.

FIG 3 zeigt beispielhaft, dass eine Regelung sämtliche Daten des Antriebs, der Lager, der Kupplung, der Arbeitsmaschine, Temperaturen von Kühlmedien (nicht dargestellt), Schallemissionen, Torsionsschwingungen der Welle etc. der Regelung des Antriebs zuführen.

Mit diesen Daten kann ein digitaler Zwilling 30 "gefüttert" werden, der auch eine Rückkopplung zum Antrieb gestattet, und dessen Arbeitsweise beeinflussen kann.

Mit der Digitalisierung vor allem eines derartigen Antriebs, der Regeleingriffe bis auf Nutebene oder gar Teilleiterebene schafft, mit der Möglichkeit aus der Regelung und/oder sogar basierend aus dem digitalen Zwilling regelnd in das Maschinenverhalten des aktuellen Betriebs des Antriebs einzugreifen, ergeben sich eine Reihe von Vorteilen für die elektrische Maschine und/oder eine Arbeitsmaschine.

Damit kann somit das Schwingungsverhalten, das Geräuschverhalten und die Pendelmomente minimiert werden bei gleichzeitigem Maximieren des Wirkungsgrades des Antriebs. Ebenso werden damit die Gleichlaufeigenschaften verbessert.

Durch die ständige Analyse des Istzustands des aktuellen Antriebs und auch einer Datenzusammenführung im digitalen Zwilling anderer typgleicher Antriebe kann die Analyse der einzelnen Bauteilbeanspruchung verbessert werden. Dies führt auch zu einer Verbesserung einer Verfügbarkeitsbeurteilung des Antriebs.

Datenübertragung kann synchron oder asynchron (in Datenblöcke) erfolgen. Ebenso ist die Datenübertragung unidirektional als auch bidirektional möglich.

Datenübertragungsrate kann je nach Dynamik der überwachten und/oder erfassten Daten bei einigen Bit/s bis zu Mbit/s sein.

## Patentansprüche

1. Antrieb (32) mit einer rotatorischen dynamoelektrischen Maschine (1) mit mehreren Wechselrichtermodulen (6),
- wobei die rotatorische dynamoelektrische Maschine (1) einen Stator (2) und einen Rotor (8) aufweist,
- wobei der Stator (2) ein Wicklungssystem in einem magnetisch leitfähigen Körper, insbesondere einem Blechpaket aufweist, wobei Stator (2) und Rotor (8) durch einen Luftspalt (22) voneinander getrennt sind,
- wobei das Wicklungssystem in Nuten (3) des magnetisch leitfähigen Körpers angeordnet ist, die zu dem Luftspalt (22) weisen,
- wobei das Wicklungssystem pro Nut (3), insbesondere einen in Teilleiter unterteilten Leiterstab (4) aufweist, dessen Teilleiter an einem ersten Ende des Leiterstabes (4) mit zumindest einem Wechselrichtermodul (6) elektrisch kontaktiert sind und dessen Teilleiter am anderen Ende, also zweiten Ende des Leiterstabes (4) an der anderen Stirnseite des magnetisch leitfähigen Körpers des Stators (2) mit den anderen Teilleitern der weiteren in den jeweiligen Nuten (3) angeordneten Leiterstäben (4) zu einem Kurzschlussring (5) elektrisch zusammengefasst sind,
- wobei an und/oder innerhalb des Antriebs (32) eine vorgebbare Anzahl von physikalischen und/oder chemischen Sensoren vorgesehen sind, die zumindest einem oder mehreren Abschnitten der rotatorische dynamoelektrische Maschine (1) und/oder einem oder mehreren Wechselrichtermodulen (6) zugeordnet sind,
- wobei dem Antrieb (32) zumindest eine Auswerte- und/oder Regeleinheit (29) zugeordnet ist, die zumindest eine Vorabauswertung von erfassten Daten der Sensoren ermöglicht,
- wobei eine Kommunikation von der Auswerte- und/oder Regeleinheit (29) zu zumindest einer Cloud und/oder zu den Wechselrichtermodulen in vorgebbaren Zeitabschnitten und/oder Datenpaketen ermöglicht ist.

2. Antrieb (32) nach Anspruch 1, **dadurch ge-kennzeichnet**, dass einer oder mehrere Teilleiter, insbesondere ein Teilleiterbündel eines Leiterstabes (4) an ein Wechselrichtermodul (6) angeschlossen sind.

3. Antrieb (32) nach Anspruch 1 oder 2, **dadurch gekennzeichnet, dass** die Sensoren Betriebsparameter, beispielsweise Schwingungsverhalten von Stator und/oder Rotor, Geräuschverhaltens, Pendelmomenten, Gleichlaufeigenschaften erfassen und an die Auswerte- und/oder Regeleinheit (29) weiterleiten.

4. Antrieb (32) nach Anspruch 3, **dadurch ge-kennzeichnet**, dass die über die Sensoren erfassten Daten kabelgebunden oder kabellos an die Auswerte- und/oder Regeleinheit (29) übermittelbar sind.

5. Verfahren zum Betrieb und/oder Überwachung und/oder Simulieren eines Antriebs (32) nach einem der Ansprüche 1 bis 4 durch folgende Schritte:
- Erfassen von zumindest einigen der Daten im und am Antrieb (32) mittels geeigneter Sensoren und/oder Erfassungsmittel,
- Übermittlung der erfassten Daten an zumindest eine Auswerte- und/oder Regeleinheit (29), wobei dort zumindest eine Vorabauswertung der Daten stattfindet,
- wobei abhängig von der Auswertung Betriebsparametern, wie Spannung und/oder Strom über das oder die Wechselrichtermodule bis auf Teilleiterebenen eines Stators einer dynamoelektrischen Maschine (1) gezielt erfasst, ausgewertet, überwacht und geregelt werden.

6. Digitales Zwillingssystem eines Antriebs (32) nach einem der vorhergehenden Ansprüche aufweisend:
- einen physischen Teil mit einem physischen Antrieb (32) zum Antreiben einer Arbeitsmaschine (28),
- einen virtuellen Teil mit einem digitalen Abbild des Antriebs (32),
- Sensoren und Erfassungselemente zur Erfassung von Daten des Antriebs (32) innerhalb und/oder außerhalb des Antriebs (32),
- zumindest ein Datenübertragungselement (33) zur Datenübertragung zwischen dem physischen Teil und dem virtuellen Teil,
- wobei die Daten durch das Datenübertragungselement (33) zum virtuellen Teil übertragbar sind, wobei das digitale Abbild des Antriebs (32) in Abhängigkeit der übermittelten Daten veränderbar ist.

7. Digitales Zwillingssystem eines Antriebs nach Anspruch 6, wobei der physikalische Antrieb (32), insbesondere die Wechselrichtermodule (6) oder zumindest einzelne Wechselrichtermodule (6) über das Datenübertragungselement (33) ausgehend von der Auswerte- und/oder Regeleinheit (29) oder dem virtuellen Antrieb (32) aktiv beeinflusst wird.

8. Computerprogrammprodukt zum Simulieren eines Betriebsverhaltens eines Antriebs (32), der eine Arbeitsmaschine antreibt nach einem der vorhergehenden Ansprüche, **da-durch gekennzeichnet**, dass der Antrieb (32) nach einem der vorhergehenden Ansprüche ausgebildet ist.
